Europäisches Patentamt

European Patent Office

Office européen des brevets

(11) Publication number: 0 203 630 A2

# EUROPEAN PATENT APPLICATION

(21) Application number: 86200576.6

(51) Int. Cl.⁴: B32B 27/08

(22) Date of filing: 04.04.86

(30) Priority: 29.04.85 US 728004

(43) Date of publication of application:
03.12.86 Bulletin 86/49

(84) Designated Contracting States:
AT BE CH DE FR GB IT LI LU NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Armer, Thomas Alex
6500 Sandspoint 504
Houston Texas 77074(US)

(74) Representative: Aalbers, Onno et al
P.O. Box 302
NL-2501 CH The Hague(NL)

(54) Multiple-layer materials.

(57) A multiple-layer sheet or tubular material which is highly transparent and thus particularly suitable for food or medical containers which includes (1) a core layer of a random copolymer, (2) a tie layer of the material selected from the group consisting of (a) an ethylene vinyl acetate copolymer, (b) an acrylic acid modified polyolefin, (c) a maleated polyolefin, (d) a saponified polyolefin, (e) a diblock styrenic rubber and (f) an acrylic copolymer, (3) optionally a suitable barrier polymer and (4) a layer of an engineering thermoplastic.

EP 0 203 630 A2

## MULTIPLE-LAYER MATERIALS

The invention relates to multiple-layer sheet or tubular materials, and more particularly to polymeric multiple-layer sheet or tubular materials from which food and medical packages may be made.

Plastic and plastic paper laminates for use in packages or containers are known. For example, US patent specification 2,956,723 describes a sheet material for making containers. The material is a laminated film having at least one lamina formed of a uni-directional molecularly oriented, linear crystalline polyalkene, such as polyethylene, and at least one other lamina comprising low density polyethylene.

Similarly, US patent specification 3,927,245 describes a resin coated carton blank having a fibreboard core, both surfaces of which are covered by ethylene polymer coatings with specified thickness and density. A third ethylene polymer coating, for instance polyethylene terephthalate, is applied to the ethylene polymer coating which is to be on the exterior of the carton to be constructed from the blank.

US patent specification 4,183,435 describes a multiple-layer material suitable for containers to be used in microwave ovens. The material includes a core layer of foamed, high density polymeric material and surface layers on both sides of the core layer. The relatively thin surface layers are a polyester material such as polyethylene terephthalate. The core layer provides structural integrity for the material.

The above-mentioned known materials are intended to be used in making liquid containers where the non porous nature of the material is the critical property, or where the container may be adapted to heat food in microwave ovens.

However, end uses of food and medical packages require a cost effective, chemically inert heat stable layer which has (1) high impact strength, (2) high heat distortion resistance and stiffness, (3) good gas and vapour barrier properties, and (4) high clarity so that the food or medical contents are visible for inspection while still maintaining the integrity of the package. Heretofore, food and medical packaging materials have usually lacked the clarity needed for optimal packaging and use.

A multiple-layer sheet or tubular material has now been found which is particularly suitable for food or medical containers since it is highly transparent.

Accordingly, the invention provides a multiple-layer sheet or tubular material from which food and medical packages may be made, which comprises:-

(1) a core layer of a random copolymer;

(2) a second layer of at least one layer of a material selected from the group consisting of (a) an ethylene vinyl acetate copolymer, - (b) an acrylic acid modified polyolefin, (c) a maleated polyolefin, (d) a saponified polyolefin, (e) a diblock styrenic rubber and - (f) an acrylic copolymer;

(3) optionally a suitable barrier polymer; and

(4) at least one layer of an engineering thermoplastic.

The invention is further illustrated by means of the accompanying drawings wherein:-

Figure 1 is an enlarged cross-sectional view of a multiple-layer sheet material according to the present invention; and

Figure 2 is an enlarged cross-sectional view of a multiple-layer tubular material according to the present invention.

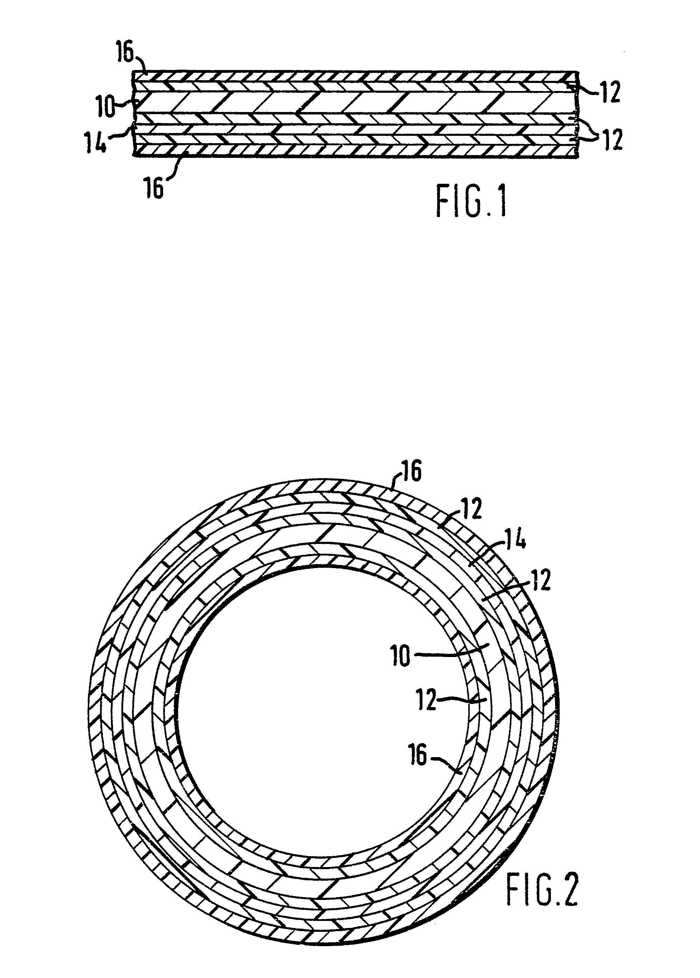

Figure 1 is an enlarged cross-sectional view of a multiple-layer sheet material according to the present invention. The material may be up to 0.635 cm thick and is preferably about 0.0254 cm thick. The material includes a core layer 10 of a random copolymer which has high clarity, preferably a random polypropylene copolymer. The random copolymer layer 10 provides a cost effective clear chemically inert heat stable layer. The layer 10 may be from about 10% by weight to about 90% by weight of the total thickness of the multilayer sheet material. At least one layer 12 of the material selected from the group consisting of (a) an ethylene vinyl acetate copolymer, (b) an acrylic acid modified polyolefin, (c) a maleated polyolefin, (d) a saponified polyolefin, (e) a diblock styrenic rubber, and (f) an acrylic copolymer is adjacent to layer 10. Layer 12 is a smooth clear polymer layer which serves as a tie layer and is in intimate contact with the copolymer. Layer 12 may be from about 5% by weight to about 15% by weight of the total thickness of the multilayer sheet material. Optionally, a barrier polymer layer 14 could be adjacent to layer 12 and which would provide gas and vapour transmission resistance if needed. Examples of the barrier polymer layer 14 are poly(vinylidene chloride), ethylene-vinylalcohol copolymers and polyacrylonitrile copolymers. Layer 14 may be from about 0% by weight to about 5% by weight of the total thickness of the multi-layer sheet material.

The outer layer 16, which is always adjacent to a layer 12, is an engineering thermoplastic which gives the laminar structure melt strength with thermoforming, impact strength, high heat distortion resistance and stiffness. Preferred engineering thermoplastics are polycarbonates and polyethylene terephthalate. Layer 16 may be from about 5% by weight to about 85% by weight of the total thickness of the multi-layer sheet material.

Below are illustrated some of the many possible combinations of such layers:

Key: A = engineering thermoplastic

B = the second or tie layer consisting of at least one layer of a material selected from the group consisting of (a) an ethylene vinyl acetate copolymer, (b) an acrylic acid modified polyolefin, (c) a maleated polyolefin, (d) a saponified polyolefin, (e) a diblock styrenic rubber and (f) an acrylic copolymer

C = the core layer of a random copolymer with high clarity

D = barrier polymer, e.g. poly(vinylidene chloride), an ethylene-vinylalcohol copolymer or a polyacrylonitrile copolymer.
Combinations: 1. A/B/A

2. A/B/C/D/A

3. A/B/D/B/C

4. A/B/C/B/D/B/A.
Combination number 4 is illustrated in Fig. 1.

The multiple-layer material may be formed into a sheet or tube by either coextrusion of the layers or heat sealing the layers.

Fig. 2 illustrates the tubular formation as exemplified in Combination number 4 above. The reference numbers used in Fig. 2 have the same meaning as in Fig. 1.

It is thought that the random copolymer provides the transparency that is particularly unique to this application. The high clarity of the containers allows the contents to be visible for inspection while maintaining the integrity of the package. The high heat distortion properties allow sterilization of the contents while the barrier properties prevent spoilage or contamination of the contents.

Other kinds of specific polymeric materials might be used depending upon the application of the material. In addition, techniques other than extrusion and heat sealing may be used to form the sheet or tube from which the packages may be made.

**Claims**

1. A multiple-layer sheet or tubular material from which food and medical packages may be made, which comprises:-

(1) a core layer of a random copolymer;

(2) a second layer of at least one layer of a material selected from the group consisting of - (a) an ethylene vinyl acetate copolymer, (b) an acrylic acid modified polyolefin, (c) a maleated polyolefin, (d) a saponified polyolefin, (e) a diblock styrenic rubber and (f) an acrylic copolymer;

(3) optionally a suitable barrier polymer; and

(4) at least one layer of an engineering thermoplastic.

2. A sheet or tubular material as claimed in claim 1 in which the core layer of random copolymer is a polypropylene copolymer.

3. A sheet or tubular material as claimed in claim 1 or 2 in which the second layer is a maleated polypropylene polyethylene blend.

4. A sheet or tubular material as claimed in claim 1 or 2 in which the second layer is a blend of polypropylene and ethylene vinyl acetate copolymer.

5. A sheet or tubular material as claimed in any one of the preceding claims in which the optional barrier polymer is poly(vinylidene chloride) or an ethylene-vinylalcohol copolymer.

6. A sheet or tubular material as claimed in any one of the preceding claims in which the engineering thermoplastic is a polycarbonate or a polyethylene terephthalate.

7. A sheet or tubular material as claimed in any one of the preceding claims in which said material is formed by coextrusion of said layers.

8. A sheet or tubular material as claimed in any one of claims 1 to 6 in which said material is formed by heat sealing said layers.

16

10

14

16

12

12

FIG.1

16

12

14

12

10

12

16

FIG.2